# EUROPEAN PATENT APPLICATION

(11) **EP 3 682 734 A1**
(43) Date of publication of application: **22.07.2020**
(21) Application number: 19216177.6
(22) Date of filing: 13.12.2019
(51) Int. Cl.: A01K 3/00

(54) **ELECTRIC FENCE AND RELATED MANUFACTURING METHOD**

(30) Priority: 16.01.2019 CN 201910039249; 16.01.2019 CN 201920069381 U
(71) Applicant: Highten (Suzhou) Sports Equipment Co., Ltd, Zhangjiagang City, Jiangsu 215600 (CN)
(72) Inventor: Zhou, Jie, Zhangjiagang City, Jiangsu 215600 (CN)
(74) Representative: Murgitroyd & Company

(57) **Abstract**

An electric fence and its manufacturing method. The electric fence includes multiple warp cords (1) and multiple weft cords (2) raschel knitted together using a raschel knitting machine to form the electric fence having multiple rectangular holes (3). The warp cords (1) include a top warp cord (10), a bottom warp cord (11), and multiple middle warp cords (12) between the top and bottom warp cords (10, 11). The middle warp cords (12) include electrically charged middle warp cords (120) and electrically uncharged middle warp cords (121), the charged middle warp cords (120) being interlaced among the uncharged middle warp cords (121). The bottom warp cord (11) and the uncharged middle warp cords (121) are formed of synthetic fibers, and the top warp cord (10) and the charged middle warp cords (120) are formed of synthetic fibers and at least one metal wire in each cord. The manufacturing method increases productivity and reduces production cost, and the electric fence is suitable for a low temperature environment.

## Description

### BACKGROUND OF THE INVENTION

### Field of the Invention

This invention relates to animal husbandry and protection of farm animals, and in particular, it relates to an electric fence and related manufacturing method.

### Description of Related Art

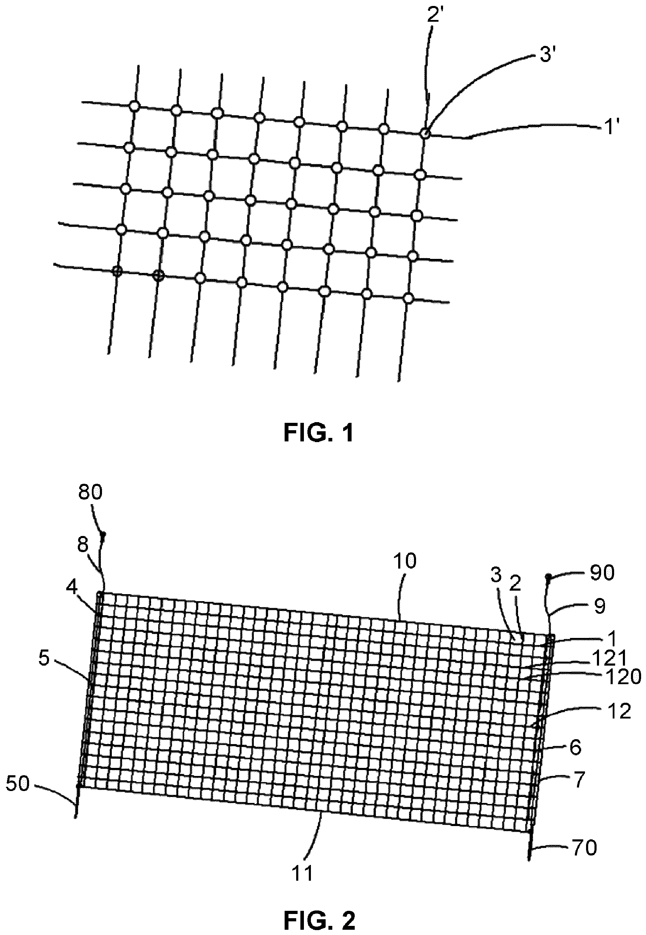

Metal fenced are conventionally used in animal husbandry. While metal fences can provide a certain degree of protection, it is not always effective. Sometimes, animals such as poultry may escape through the metal fence, and wild animals sometimes enter the farm through the metal fence, causing economic damage to farm owners. To solve these problems, electric fences are developed, which integrate metal wires into the fence to carry high voltage but low current electricity. When farm animals inside the farm or wild animals outside the farm touch the electric fence, they will be shocked by the high voltage and low current electricity, which will discourage them from going over or through the fence. Such electric fence is much more effective than unelectrified metal fences, and also have low manufacturing cost. Fig. 1 illustrates an electric fence, which includes warp cords 1' and weft cords 2'. The warp cords 1' are formed of multiple synthetic fiber yarns and multiple metal wires twisted together with a twister machine; the weft cords 2' are formed of multiple synthetic fiber yarns twisted together with a twister machine; and the crossing points 3' of the warp cords 1' and weft cords 2' are injection molded using an injection molding machine. Shortcomings of electric fences of such a structure include: Each electric fence may have hundreds, thousands or tens of thousands of crossing points 3'; if each crossing points 3' is manually formed by injection molding, the productivity will be low and the cost will be high. Moreover, the crossing points are formed of plastic materials, which may become brittle at low temperature and shorten its life.

Accordingly, an improved electric fence that solves the above problem is desired.

### SUMMARY

To solve the above problems, embodiments of the present invention provide an electric fence that is efficient to produce, low cost, and is suitable for low temperature environment, and related manufacturing method.

To achieve the above objects, the present invention provides an electric fence, which includes: a plurality of warp cords and a plurality of weft cords, wherein the plurality of warp cords and the plurality of weft cords for a raschel knitted net having a plurality of rectangular holes, wherein the plurality of warp cords include a top warp cord, a bottom warp cord, and a plurality of middle warp cords disposed between the top and bottom warp cords, wherein the plurality of middle warp cords include a plurality of electrically conductive middle warp cords and a plurality of electrically non-conductive middle warp cords, the electrically conductive middle warp cords being interlaced among the electrically non-conductive middle warp cords, and wherein each of the bottom warp cord and the electrically non-conductive middle warp cords is formed of synthetic fibers, and each of the top warp cord and the electrically conductive middle warp cords is formed of synthetic fibers and at least one metal wire.

Preferably, in the electric fence, one end of each warp cord is affixed to a first post by a fastener, another end of each warp cord is affixed to the second post by a fastener, and the first post and second post respectively have grounding sections at their bottom end.

Preferably, in the electric fence, one end of each electrically conductive middle warp cord is electrically coupled to a first power supply connector via a first conductor wire, and the other end of each electrically conductive middle warp cord is electrically coupled to a second power supply connector via a second conductor wire.

Preferably, in the electric fence, sections of each metal wire are exposed on an outer surface of the corresponding electrically conductive middle warp cord.

Preferably, in the electric fence, the synthetic fibers are nylon, polyester, polypropylene, or ethylene fibers.

In another aspect, the present invention provides a method of manufacturing the electric fence, which include the following steps. Step a, material selection: Synthetic fibers are provided as the material for knitting the electric fence. Step b, machine selection and knitting: A raschel knitting machine is used to raschel knit the synthetic fibers, which knits the warp cords and weft cords into an integrally knitted structure to form the electric fence. During knitting, at least one metal wire is mixed in at least one of the warp cords. Step c: One ends of the warp cords are affixed to the first post by fasteners, and the other ends of the warp cords are affixed to the second post by fasteners. Step d: Using conductor wires to electrically couple the warp cords that have metal wires in parallel and to electrically couple them to the power supply connectors.

Compared to conventional technologies, the electric fence according to embodiments of the present invention has the following advantages. By using a raschel knitting machine to form the fence integrally, the warp cords and weft cords are directly connected together at the crossing points by raschel knitting, which eliminates the need for using injection molding to connect the warp and weft cords at the crossing points. This greatly increases productivity and lowers production cost. It also makes the fence more suitable for low temperature environment, because as compared to injection molded plastics, synthetic fibers can better withstand low temperature, and will not become brittle in low temperature environment.

### BRIEF DESCRIPTION OF THE DRAWINGS

Figure 1 schematically illustrates the structure of an electric fence according to conventional technology.
Figure 2 schematically illustrates the structure of an electric fence according to embodiments of the present invention.
Figures 3A and 3B schematically illustrate two examples of raschel knitted net structures.

In Figure 1: 1': warp cords, 2': weft cords, 3': crossing points

In Figure 2: 1: warp cords, 10: top warp cord, 11: bottom warp cord, 12: middle warp cords, 120: electrically charged/conductive middle warp cords, 121: electrically uncharged/non-conductive middle warp cords, 2: weft cords, 3: rectangular holes, 4: fasteners, 5: first post, 50 and 70: grounding sections, 6: fastener, 7: second post, 8: first conductor wire, 80: power supply connector, 9: second conductor wire, 90: power supply connector.

### DETAILED DESCRIPTION OF PREFERRED EMBODIMENTS

An electric fence and its manufacturing method according to embodiments of the present invention are described in detail below.

As illustrated in Fig. 2, the electric fence includes a plurality of warp cords 1 and a plurality of weft cords 2, which are raschel knitted together using a raschel knitting machine (a type of warp knitting machine), to form a raschel knitted net (the electric fence) having a plurality of rectangular holes 3. Note that in this disclosure, the term fence or electric fence is used to refer to either the knitted net or the assembly that includes the knitted net and other ancillary structures (described in more detail below), depending on context. By using the raschel knitting machine to form the fence, the size of the holes defined by the warp and weft cords can be adjusted, and the diameter of the cords can be adjusted. The plurality of warp cords 1 include a top warp cord 10, a bottom warp cord 11, and a plurality of middle warp cords 12 disposed between the top warp cord 10 and the bottom warp cord 11. The plurality of middle warp cords 12 include a plurality of electrically charged middle warp cords 120 and a plurality of electrically uncharged middle warp cords 121. The plurality of charged middle warp cords 120 are interlaced among the plurality of uncharged middle warp cords 121. Each of the bottom warp cord 11 and the uncharged middle warp cords 121 is an electrically non-conductive cord formed of electrically non-conductive fibers such as synthetic fibers, and each of the top warp cord 10 and the charged middle warp cords 120 is an electrically conductive cord formed of electrically non-conductive fibers such as synthetic fibers and at least one metal wire in each cord. Sections of the metal wire are exposed on the outer surface of the corresponding charged middle warp cords 120 throughout the cord. This can provide contact points for the high voltage conduction, as well as to increase the strength of the fence. In a preferred embodiment, the synthetic fibers are nylon fibers. In other embodiments, the synthetic fibers may be polyester, polypropylene, or ethylene fibers, etc.

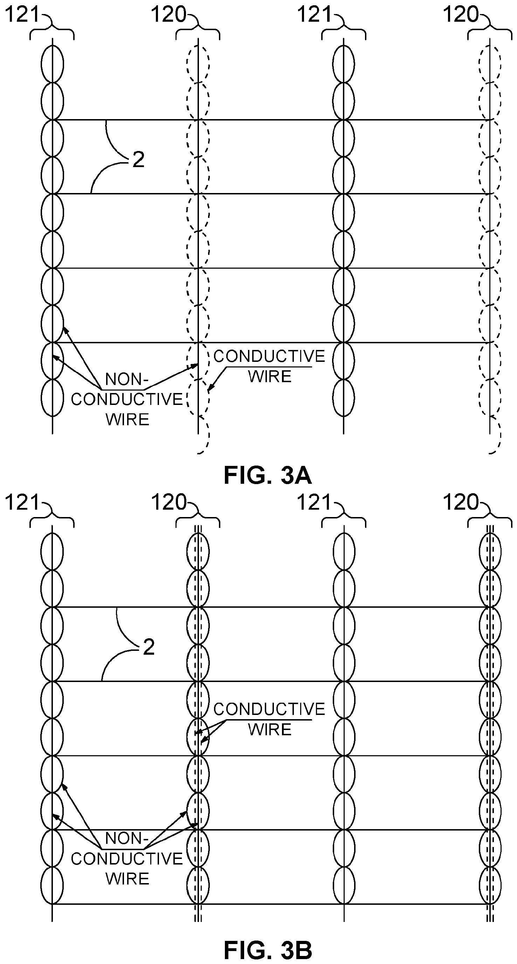

More specifically, in one example, illustrated in Fig. 3A, in the raschel knitted fence structure, each charged middle warp cord 120 includes a conducting wire that has a looped chain structure, as well as other warp insertion cords. The conducting wires form continuous loops. An advantage of this structure is that each charged cord (conducting wire) is exposed in many sections, which enhances the sensitivity and effectiveness of the fence structure.

In another example, illustrated in Fig. 3B, in the raschel knitted fence structure, each charged middle warp cord 120 includes a non-conducting cord that has a looped chain structure, and one or more straight conducting wires as warp insertion cords. The conducting wires are continuous straight wires. An advantage of this structure is that it requires a less amount of conducting wires, which lowers cost of the fence as well as power consumption, making it more economical.

One end of each warp cord 1 is affixed to a first post 5 by a fastener 4, and the other end of the warp cord 1 is affixed to a second post 7 by a fastener 6. The first post 5 and second post 7 respectively have insertion sections 50 and 70 at their bottom end, which will be inserted into and buried in the ground. One end of each charged middle warp cord 120 is electrically coupled to a power supply connector 80 via a first conductor wire 8, and another end of the charged middle warp cord 120 is electrically coupled to another power supply connector 90 via a second conductor wire 9.

A method of manufacturing the electric fence include the following steps. Step a, material selection: Synthetic fibers are provided as the material for knitting the electric fence. Step b, machine selection and knitting: A raschel knitting machine is used to raschel knit the synthetic fibers, which knits the warp cords and weft cords into an integrally knitted structure to form the electric fence. During knitting, at least one metal wire is mixed in at least one of the warp cords. Step c: One ends of the warp cords are affixed to the first post by fasteners, and the other ends of the warp cords are affixed to the second post by fasteners. Step d: Using conductor wires to electrically couple the warp cords that have metal wires in parallel and to electrically couple them to the power supply connectors.

To summarize, because the electric fence according to embodiments of the present invention is made using a raschel knitting machine to form the fence integrally, the warp cords and weft cords are directly connected together at the crossing points by raschel knitting, which eliminates the need for using injection molding required by conventional technologies to connect the warp and weft cords at the crossing points. This greatly increases productivity and lowers production cost. It also makes the fence more suitable for low temperature environment, because as compared to injection molded plastics, synthetic fibers can better withstand low temperature, and will not become brittle in low temperature environment.

It will be apparent to those skilled in the art that various modification and variations can be made in the electric fence and its manufacturing method of the present invention without departing from the spirit or scope of the invention. Thus, it is intended that the present invention cover modifications and variations that come within the scope of the appended claims and their equivalents.

## Claims

1. An electric fence, comprising:
a plurality of warp cords and a plurality of weft cords,
wherein the plurality of warp cords and the plurality of weft cords form a raschel knitted net having a plurality of rectangular holes,
wherein the plurality of warp cords include a top warp cord, a bottom warp cord, and a plurality of middle warp cords disposed between the top and bottom warp cords, wherein the plurality of middle warp cords include a plurality of electrically conductive middle warp cords and a plurality of electrically non-conductive middle warp cords, the electrically conductive middle warp cords being interlaced among the electrically non-conductive middle warp cords, and
wherein each of the bottom warp cord and the electrically non-conductive middle warp cords is formed of synthetic fibers, and each of the top warp cord and the electrically conductive middle warp cords is formed of synthetic fibers and at least one metal wire.

2. The electric fence of claim 1, further comprising:
a first post and a fastener, wherein one end of each warp cord is affixed to the first post by the fastener; and
a second post and another fastener, wherein another end of each warp cord is affixed to the second post by the other fastener, and
wherein the first post and second post respectively have grounding sections at their bottom end.

3. The electric fence of claim 1, further comprising a first conductor wire, a second conductor wire, a first power supply connector, and a second power supply connector, wherein the one end of each electrically conductive middle warp cord is electrically coupled to the first power supply connector via the first conductor wire and another end of each electrically conductive middle warp cord is electrically coupled to the second power supply connector via the second conductor wire.

4. The electric fence of claim 1, wherein sections of each metal wire are exposed on an outer surface of the corresponding electrically conductive middle warp cord.

5. The electric fence of claim 1, wherein the synthetic fibers are nylon, polyester, polypropylene, or ethylene fibers.

6. A method for manufacturing the electric fence of claim 2, the method comprising:
providing synthetic fibers as a material for knitting the electric fence;
using a raschel knitting machine, raschel knitting the warp cords and weft cords of the electric fence into the raschel knitted net, wherein during knitting, at least one metal wire is mixed in at least one of the warp cords;
affixing the one end of each warp cord to the first post by fasteners, and affixing the other end of each warp cords to the second post by fasteners; and
using the conductor wires to electrically couple the warp cords that have metal wires in parallel and to electrically couple them to the power supply connectors.
